# FASCICULE DE BREVET EUROPEEN

(11) **EP 0 685 321 B1**
(45) Date de publication et mention de la délivrance du brevet: **26.01.2000**
(21) Numéro de dépôt: 95107584.5
(22) Date de dépôt: 18.05.1995
(51) Int. Cl.: B29D 30/12, B29D 30/06, B29C 43/36

(54) **Assemblage et vulcanisation de pneumatique**
Konfektionierung und Vulkanisation von Reifen
Tyre assembling and vulcanizing

(30) Priorité: 27.05.1994 FR 9406656
(43) Date de publication de la demande: 06.12.1995
(73) Titulaire: SEDEPRO, F-75015 Paris (FR)
(72) Inventeur: Laurent, Daniel, F-38240 Meylan (FR); Mousty, Hervé, F-63670 Orcet (FR)
(74) Mandataire: Bauvir, Jacques

(56) Documents cités:
- EP-A- 0 096 648
- EP-A- 0 580 991
- DE-A- 1 934 465
- DE-A- 2 734 587
- US-A- 1 405 427
- US-A- 2 910 109
- US-A- 3 726 742
- US-A- 3 990 930

## Description

La présente invention concerne la fabrication des pneumatiques. Plus particulièrement, elle se rapporte aux techniques de fabrication des pneumatiques sur un support dont la forme est très proche, voire identique à la forme finale de fabrication du pneumatique.

Le brevet US 4 895 692 décrit un moule pour pneumatique comportant un noyau rigide imposant la forme interne du pneumatique ; il décrit également un procédé d'assemblage du pneumatique utilisant un tel moule. On peut qualifier un tel moule de "rigide" parce que ce moule impose au pneumatique un espace de moulage de volume donné. Ce volume est délimité à l'extérieur par les coquilles du moule et par l'ensemble des secteurs moulant la bande de roulement, et à l'intérieur, par le noyau rigide. L'utilisation de ce moule conduit à une étape de vulcanisation à volume quasiment imposé. On sait aussi que la plupart des moules couramment utilisés à l'heure actuelle sont des moules ne comportant que les deux coquilles assurant le moulage de l'extérieur des flancs et une couronne de secteurs assurant le moulage de l'extérieur de la bande de roulement. L'utilisation de ces moules en vulcanisation conduit à, pour assurer le moulage, déployer à l'intérieur du pneumatique cru une membrane souple, ce qui fait que l'on peut considérer que la vulcanisation se produit dans ce cas à pression imposée, et non pas à volume imposé.

L'objectif de la présente invention consiste à fabriquer un pneumatique sur un support qui soit aussi proche que possible de sa forme finale de fabrication, à l'image de la technique décrite dans le brevet US 4 895 692, tout en réalisant une étape de vulcanisation qui s'apparente plutôt au procédé que l'on a qualifié ci-dessus de vulcanisation à pression imposée.

Un objectif poursuivi par l'invention consiste à créer un procédé de fabrication de pneumatique qui évite que l'ébauche de pneumatique, au cours de son assemblage, ne subisse des transferts consistant à la déplacer d'un tambour à un autre ou d'un support à un autre. Tous ces transferts et toutes ces manipulations de l'ébauche sont en effet source de nombreuses imprécisions d'assemblage et source de défauts d'uniformité dans le pneumatique fabriqué.

A cette fin, l'invention propose un procédé de fabrication d'un pneu, comprenant une phase d'assemblage formant une ébauche crue et une phase de vulcanisation, dans lequel on utilise une membrane flexible gonflable, capable de retenir par adhésion le caoutchouc cru constituant la peau intérieure du pneu pendant la phase d'assemblage, et capable de se séparer du pneu après vulcanisation, comprenant les étapes suivantes:
- on gonfle ladite membrane à une pression d'assemblage donnée, de façon à former un support de référence pour l'assemblage, ledit support ayant une forme toroïdale,
- ensuite on forme une ébauche crue en débutant par la dépose du caoutchouc constituant la peau intérieure du pneumatique par bobinage d'un ruban, puis en déposant progressivement et dans l'ordre requis tous les constituants voulus sur ladite membrane,
- ensuite on vulcanise l'ébauche,
- et enfin on dégonfle ladite membrane et on la retire de l'intérieur du pneumatique.

Pour effectuer la vulcanisation de l'ébauche sur la même membrane, on peut avantageusement refermer autour de l'ébauche un moule de moulage de la surface extérieure des flancs et de la bande de roulement et ajuster ensuite la pression de ladite membrane à une pression de moulage suffisante pour assurer le moulage du pneu, et, en fin de vulcanisation, on dégonfle la membrane pour permettre la séparation du pneu et de ladite membrane et pour permettre le déchargement du pneumatique vulcanisé.

Cela consiste à fabriquer en totalité un pneumatique sur une membrane gonflable, puis à vulcaniser celui-ci sur la même membrane, sans aucun transfert de l'ébauche par rapport à la membrane. La membrane utilisée est capable de maintenir le caoutchouc cru constituant la peau intérieure du pneu au fur et à mesure de la dépose pendant la phase d'assemblage. On entend par là que le ruban de caoutchouc que l'on dépose sur la membrane adhère suffisemment à celle-ci pour rester à l'endroit où il a été déposé. Pour la dépose de ce ruban, on peut utiliser différentes techniques, comme la dépose d'un ruban préformé, ou bien comme l'extrusion directe d'une quantité de caoutchouc parfaitement contrôlée en fonction de l'endroit exact où on la dépose sur la membrane.

Il faut encore que la membrane utilisée puisse se séparer du pneu après utilisation. Pour satisfaire à ces conditions, elle est réalisée dans un matériau permettant d'obtenir un bon collant à cru (c'est à dire un matériau sur lequel le caoutchouc cru adhère suffisamment pour les besoins de la dépose), tout en garantissant le décollement du pneu vulcanisé. Par exemple la membrane est réalisée en caoutchouc, comportant un revêtement en surface remplissant les conditions indiquées. On peut aussi, indépendemment de la caractéristique évoquée ci-dessus ou en combinaison avec celle-ci, utiliser un élastomère présentant un certain niveau d'incompatibilité avec les produits utilisés dans le pneumatique, et plus particulièrement avec les produits dont on fait la peau intérieure du pneumatique.

Par "fabrication d'un pneumatique", on entend une fabrication aussi bien complète que partielle, c'est à dire éventuellement la fabrication d'un ensemble comprenant les renforcements de sommet et la bande de roulement seulement, ou la fabrication d'un pneu dépourvu d'un tel ensemble. Quel que soit l'objet fabriqué, le support de référence reçoit les tous premiers matériaux qui sont en général déposés par enroulement sur le support, ainsi que tous les suivants pour réaliser un assemblage complet, contrairement à d'autres dispositions connues où la membrane de vulcanisation ou bien un tambour de reprise comme un tambour de deuxième temps reçoit un produit complexe constitué par un semi-fini obtenu par assemblage de plusieurs composants élémentaires.

Par "support de forme toroïdale", on entend un support dont la forme de la surface apparente extérieure est très éloignée d'une forme cylindrique, pour s'approcher d'une forme ressemblant à la forme de la surface intérieure du pneumatique. Cette forme est donc de nature très différente de la forme des tambours d'assemblage de premier temps, connus dans l'état de la technique, présentant une surface quasi cylindrique, bordée de part et d'autre d'une gorge ou d'un épaulement pour définir la position des tringles. Cette forme, de révolution, peut présenter une section méridienne approximativement en arc de cercle, ou bien ressemblant à un trapèze. Un exemple d'un tel support est donné par le brevet US 1 405 427.

Afin de pouvoir fabriquer un pneumatique sur une forme qui corresponde sensiblement à la forme finale de fabrication et de vulcanisation du pneumatique, on utilise de préférence une membrane armée. Il est ainsi possible de réaliser une forme souple qui, une fois gonflée à une pression du même ordre de grandeur que la pression de gonflage des pneumatiques de tourisme, se comporte sensiblement comme une forme rigide. Cela permet l'utilisation des outils d'assemblage de pneumatique que l'on connaît pour fabriquer un pneumatique sur un noyau rigide, tel que ceux décrits dans les brevets EP 0 243 851, EP 0 248 301, ou encore EP 264 600, à titre d'exemple non limitatif.

L'invention propose également un module de fabrication de pneu, comportant une membrane flexible gonflable et escamotable lorsqu'elle est dégonflée, ledit module comportant des moyens permettant d'ancrer ladite membrane et permettant d'offrir une prise pour le déplacement du module et permettant de définir, avec ladite membrane, une enceinte gonflable, formant au moins partiellement un support de forme toroïdale à l'état gonflé, ledit module comportant une membrane pourvue de deux talons, chaque talon étant ancré sur un plateau, ledit module comportant au moins une paroi rigide montée sur un plateau, adjacente à ladite membrane flexible lorsque celle-ci est gonflée, disposée du côté extérieur à celle-ci, escamotable afin de pouvoir séparer le pneu dudit module après vulcanisation et pouvant être déployée radialement afin de constituer une surface continue servant de référence pour l'assemblage du pneumatique.

Ce module permet l'assemblage d'un pneumatique et ensuite son transport vers une station de vulcanisation. De préférence, le module est équipé de deux prises de connexion permettant de faire circuler un fluide apportant les calories nécessaires à la vulcanisation. A la station de vulcanisation, le fluide utilisé est par exemple l'électricité, le module étant par exemple équipé de résistances capables de produire des calories, ou bien on utilise un fluide caloporteur qui amène des calories à l'intérieur du module. Selon le cas, lesdites prises de connexion peuvent être soit des prises électriques, soit des raccords pour fluide gazeux ou liquide. Grâce au moyen d'étanchéité entre plateaux, il offre la possibilité de disposer d'un support gonflé autonome, que l'on peut transporter à l'état gonflé de poste en poste au cours de l'assemblage du pneumatique, sans qu'il soit nécessaire de le connecter chaque fois à une source délivrant un fluide sous pression.

L'avantage de cette disposition est qu'elle permet plus facilement d'effecteur la dépose du caoutchouc constituant la peau intérieure du pneumatique par bobinage d'un ruban. On peut en effet choisir pour ladite paroi un matériau sur lequel les premiers enroulements de caoutchouc adhèrent très facilement, comme par exemple un matériau métallique. Si les enroulements adjacents se chevauchent légèrement, jusqu'à recouvrir tout le support, l'adhésion des rubans les uns sur les autres est suffisante pour que le caoutchouc déposé se maintienne en place sur le support même si le caoutchouc adhère en soi moins facilement sur la membrane.

De préférence, on fait remonter radialement ladite paroi jusqu'à un rayon au-delà duquel la section méridienne de la surface intérieure du pneumatique fabriqué avec lesdits modules ne forme aucun point d'inflexion. C'est dans ce cas un autre intérêt de la paroi rigide associée à une membrane que de permettre d'obtenir un support sur lequel on peut fabriquer un pneumatique réellement sans aucune conformation, du fait que dans ce cas le support peut correspondre exactement à la forme intérieure du pneumatique.

L'ensemble des opérations de configuration du module (mouvements des plateaux, ajustement de la pression de gonflage de la membrane, ...), nécessaires à la fabrication complète du pneumatique, peut être réalisé dans un poste de vulcanisation comprenant un moule pour le moulage de la surface extérieure des flancs et de la bande de roulement de pneumatique, utilisé avec un module comportant une membrane flexible gonflable capable d'impartir à la surface intérieure d'un pneumatique une pression de moulage, ladite membrane comprenant deux talons, ledit module comportant en outre deux plateaux utilisés chacun pour l'ancrage de l'un desdits talons, ledit module étant monté de façon amovible dans le poste de vulcanisation de façon à pouvoir être extrait de celle-ci et/ou introduit dans celle-ci et supportant un pneu cru, ledit poste de vulcanisation comprenant des moyens pour assurer un mouvement axial relatif entre lesdits plateaux lorsque ledit module est monté dans le poste de vulcanisation. Il comporte les moyens de connecter le module à une source de fluide sous pression. Ladite pression d'abord peut être réglée au juste nécessaire pour effectuer l'assemblage du pneumatique et ensuite, lorsque le module rejoint le poste de vulcanisation en supportant un pneumatique cru, il est possible de transmettre au module la pression et les calories nécessaires à la vulcanisation. Par ailleurs, il est également possible d'impartir au module les mouvements facilitant l'extraction de la membrane de l'intérieur du pneumatique après vulcanisation de celui-ci. Il est en effet avantageux de pouvoir écarter les plateaux supportant la membrane, afin de provoquer un plissement de celle-ci. En combinant ce plissement à une dépression suffisante à l'intérieur de la membrane, celle-ci peut être décollée de la surface interne du pneumatique et repliée de façon à pouvoir extraire aisément le pneumatique vulcanisé.

La description d'un exemple non limitatif de réalisation de l'invention est donnée dans la suite avec les dessins joints. Cela permet de bien comprendre l'invention et d'en saisir tous les avantages.

La figure 1 représente un module de fabrication de pneu selon l'invention, tel qu'il est configuré pour la phase d'assemblage d'un pneumatique.

La figure 2 est une vue de côté, partielle, selon la flèche II à la figure 1, du même module de fabrication.

La figure 3 illustre un détail du module, vu selon la flèche III de la figure 2.

La figure 4 illustre le même module pendant la phase de vulcanisation.

La figure 5 montre le module selon l'invention en position de déchargement du pneumatique.

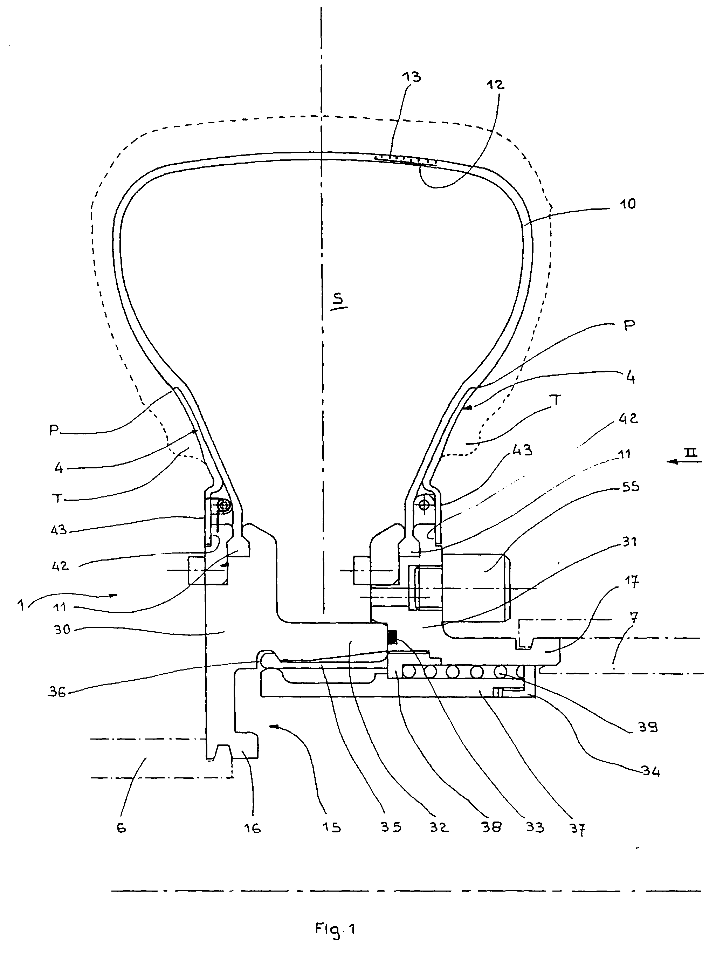

A la figure 1, on voit une membrane souple 10 comportant deux talons 11. Ceux-ci sont montés chacun sur un plateau 30, 31. La membrane 10 comporte des fils 12 de renforcement orientés à 90° (selon les conventions habituelles pour les angles utilisés dans l'industrie du pneumatique), allant d'un talon 11 à l'autre. La membrane 10 comporte également des fils 13 orientés à 0°. Afin de ne pas surcharger le dessin, la disposition des fils 12 et 13 n'est schématisée que localement. Par la combinaison de ces fils à 90° et des fils à 0°, il est possible de maîtriser parfaitement le profil dans la partie convexe de la surface extérieure de la membrane lorsqu'elle est gonflée (c'est à dire l'allure de la section radiale telle que représentée au dessus des points P à la figure 1).

Le plateau 31 comporte un joint d'étanchéité 33 torique monté dans une rainure coaxiale audit plateau. Le plateau 30 comporte un épaulement 32 qui vient en appui sur le joint d'étanchéité 33 lorsque les deux plateaux 30 et 31 sont rapprochés axialement l'un contre l'autre. Le plateau 31 comporte un mécanisme de verrouillage 34 permettant de maintenir accouplés les plateaux 30 et 31. Le mécanisme de verrouillage 34 comporte plusieurs lames flexibles 35 réparties circonférenciellement, dont l'extrémité peut s'engager dans une rainure circonférentielle 36 aménagée sur le plateau 30. Les lames 35 sont maintenues enfoncées dans la rainure circonférentielle 36 par une virole 37 non déformable, qui peut coulisser axialement, et est maintenue en position de verrouillage contre une butée 38 sous l'action d'un ressort 39. En position assemblés et verrouillés, les plateaux 30 et 31 forment une jante 15 qui, avec la membrane 10, constitue une enceinte S étanche pouvant être gonflée, grâce à un clapet auto-obturant 55 disposé sur le plateau 31.

Le module 1 ainsi constitué est une unité autonome qu'il est possible de déplacer en plusieurs endroits en fonction des nécessités de fabrication du pneumatique. Le plateau 30 comporte un prolongement 16 offrant une prise par laquelle la jante 15 peut être saisie. D'une façon analogue, le plateau 31 comporte un prolongement 17 offrant une portée par laquelle on peut saisir la jante 15.

Pour fabriquer la membrane 10, on utilise par exemple un noyau rigide démontable ou destructible, déterminant l'allure de sa surface intérieure. Sur ce noyau rigide, on dépose les produits caoutchouteux convenables, comme par exemple l'élastomère HNBR ou l'élastomère éthylène acrylate rubber ou un élastomère fluoré, et on dépose les fils de renforcement, le tout de façon convenable. Ensuite, on vulcanise l'ensemble en utilisant par exemple un moule extérieur afin d'impartir la pression de vulcanisation souhaitable ou bien en utilisant un autoclave.

L'utilisation de fils à 90° et de fils à 0°, si elle permet une excellente maîtrise du profil, ne permet cependant pas de réaliser une inversion de la courbure du support, c'est à dire ne permet pas de réaliser les parties concaves de la surface extérieure du support de fabrication du pneumatique. Autrement dit, on ne pourrait pas obtenir de point d'inflexion P sur la section méridienne de la membrane. Afin de pouvoir s'approcher d'aussi prêt que possible de l'allure interne finale du pneumatique à fabriquer, on utilise de préférence une paroi rigide 4 que l'on dispose radialement sous l'endroit P où la section du pneumatique à fabriquer comprend un point d'inflexion. L'ébauche crue T du pneumatique à fabriquer est représenté en traits discontinus, ce qui permet de bien voir comment celle-ci se dispose par rapport à la membrane 10 et par rapport aux parois 4. Dans le cas où l'on utilise de telles parois rigides 4, les fils à 0° peuvent ne renforcer que la partie de la membrane 10 radialement supérieure aux points d'inflexion P. Dans un tel cas, il est possible de maîtriser totalement l'allure de la section méridienne de la surface extérieure du support sur lequel on fabrique le pneumatique, sans devoir recourir à d'autres artifices comme des éléments mécaniques que l'on déploie à l'intérieur de la membrane.

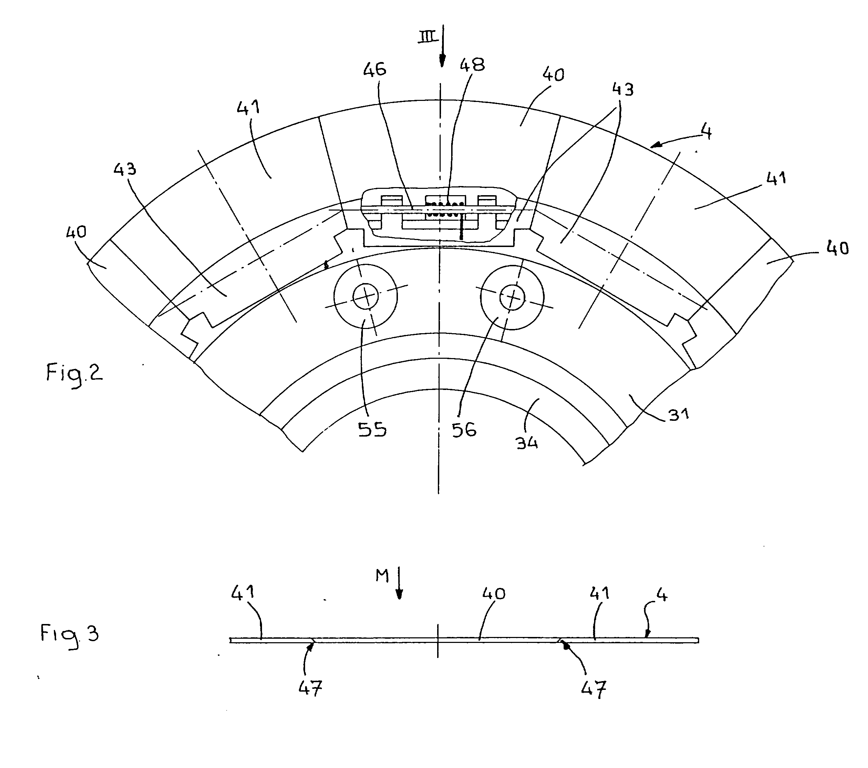

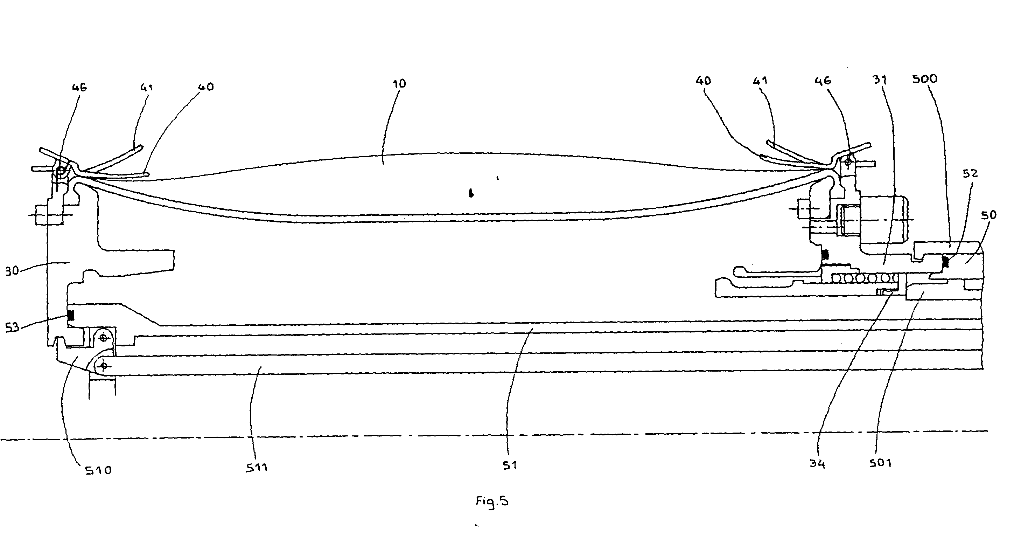

La constitution de la paroi rigide 4 apparaît en particulier à la consultation des figures 2 et 3. Il est nécessaire que cette paroi rigide 4 puisse être escamotée lorsque le pneumatique est vulcanisé afin de pouvoir dégager celui-ci du module 1. Dans ce but, la paroi rigide 4 est matérialisée par un ensemble de pétales 40 et 41. En position déployée (figures 1 à 4), les pétales forment une surface continue, pouvant servir de référence pour l'assemblage du pneumatique. Les pétales sont montés sur des charnières 46 (voir notamment l'écorché de la figure 2) et peuvent être rabattus par une rotation qui les rapproche du centre du module 1 (voir figure 5). Comme ce mouvement de rabattement amène la partie radialement supérieure de ces pétales vers des rayons plus petits, la place disponible circonférentiellement diminue. Il est donc nécessaire que les pétales se chevauchent, ce qui est obtenu dans le cas décrit par le fait que les pétales 40 se rabattent les premiers et ensuite seulement les pétales 41, afin de se disposer en quinconce, en position escamotée, comme cela apparaît à la figure 5. Ce mouvement va être expliqué en détail ci-dessous.

Notons tout d'abord que la position dans laquelle les pétales 40, 41, définissent la paroi rigide 4 et matérialisée par une butée 42 (voir figure 1) contre laquelle les pétales 40, 41 appuient via leur prolongement 43. Il sont maintenus plaqués contre cette butée 42 par la membrane gonflable 10.

Les bords 47 des pétales 40 et 41 sont orientés en biais, et forment des faces d'appui complémentaires les unes des autres, comme cela est montré à la figure 3. Chaque paroi comporte donc un nombre pair de pétales, répartis en deux groupes (un groupe identifié par le repère 40, et un second groupe identifié par le repère 41), les pétales adjacents circonférenciellement appartenant à des groupes différents. La membrane 10, non représentée aux figures 2 et 3, est disposée du côté de la flèche M à la figure 3, et en arrière plan par rapport à la figure 2. La flèche M symbolise l'effort qu'exerce la membrane 10 sous pression contre les pétales 40 et 41, effort qui les plaquent contre la butée 42. Lorsque la membrane 10 est dégonflée, ou mise en dépression, l'effort contre les pétales 40 et 41 cesse. Ils sont libres de basculer vers la position représentée à la figure 5. Ce mouvement de basculement se produit dans la direction opposée à la flèche M. De par la configuration en biais des bords latéraux 47, le basculement des pétales 40 doit toujours précéder le basculement des pétales 41, et le retour contre la butée 42 des pétales 41 doit toujours précéder le retour des pétales 40. Le rangement en quinconce des pétales 40 et 41 est ainsi toujours possible et aucun blocage ne peur survenir.

Des ressorts 48 montés sur les pétales 40 et 41 développent un effort antagoniste à l'effort développé par la membrane 10 lorsqu'elle est sous pression. L'effort développé par ces ressorts 48 tend donc en permanence à rabattre les pétales 40 vers la configuration escamotée qui est la leur à la figure 5. Le passage de la position escamotée des pétales à la position déployée se commande par le gonflage de la membrane 10. Le passage inverse est autorisé par le dégonflage de la membrane 10. Il n'est pas nécessaire de prévoir une commande spécifique pour les mouvements des pétales. Les ressorts 48 sont disposés au moins du côté du module 1 par lequel on décharge le pneumatique vulcanisé, pour une raison que l'on comprendra dans la suite. Rien n'empêche cependant d'équiper les deux parois de ressorts identiques.

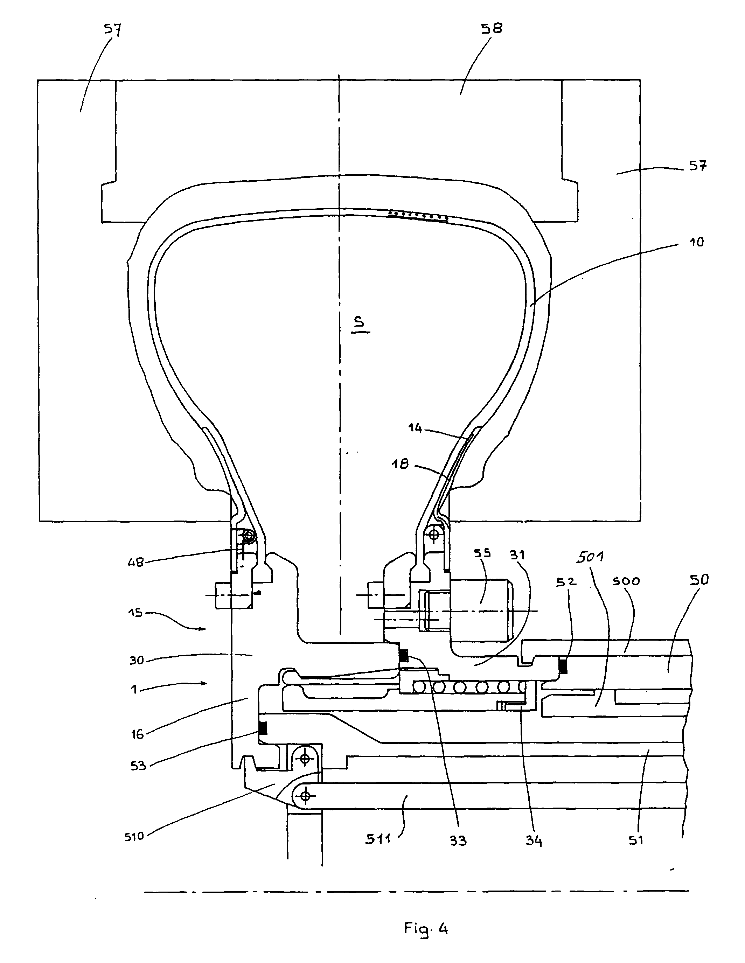

Les figures 4 et 5 montrent un module 1 monté dans un poste de vulcanisation. On voit un moule pour le moulage de la surface extérieure d'un pneumatique, comportant deux coquilles 57, et un ensemble de secteurs 58, comme cela est bien connu en soi. Le poste de vulcanisation comporte un préhenseur 50 sur lequel on peut monter le plateau 31, qui s'y trouve immobilisé par des ergots 500. Un joint d'étanchéité 52 monté sur le préhenseur 50 assure l'étanchéité entre celui-ci et le plateau 31. Un coulisseau 501 peut appuyer sur le mécanisme de déverrouillage 34. Un vérin central 51 est disposé au niveau de l'axe du moule. Il rejoint le plateau de gauche 30. La liaison s'effectue au niveau du prolongement 16, par des basculeurs 510, commandés par tige 511. Un joint d'étanchéité 53 assure l'étanchéité entre le vérin central 51 et le plateau 30. Des moyens d'étanchéité, non représentés, sont prévus entre le préhenseur 50 et le vérin central 51. L'ensemble permet d'assurer l'étanchéité entre plateaux 30 et 31, même lorsque ceux-ci sont écartés l'un de l'autre.

Le clapet auto-obturant 55 ainsi qu'un autre clapet auto-obturant 56, légèrement décalé circonférentiellement (voir figure 2), constituent l'entrée et la sortie pour un fluide caloporteur que l'on fait circuler à l'intérieur de la membrane 10 au poste de vulcanisation. Ce fluide caloporteur permet de conférer à la membrane 10 la pression nécessaire à la vulcanisation, celle-ci étant en général supérieure à la pression de moulage, et permet bien entendu d'apporter au pneumatique les calories nécessaires à la vulcanisation. Les canalisations pour le fluide caloporteur et les moyens de circulation et de chauffage de ce fluide ne sont pas représentés pour ne pas surcharger inutilement les dessins.

La fabrication d'un pneumatique peut être conduite de la façon suivante. Par exemple, on peut utiliser une machine de fabrication du pneumatique comportant un poste d'assemblage et un poste de vulcanisation. A la figure 1, en vue fantôme, on aperçoit une potence 6 qui supporte la jante 15 du côté gauche, et on voit du côté droit un moyeu 7 sur lequel la jante 15 est montée.

La potence 6 présente le module 1 à un poste d'assemblage comportant un moyeu tel que 7. Après montage du module 1 sur le moyeu 7, la potence 6 lâche le module 1 et s'esquive. Le module 1 est ainsi installé au poste d'assemblage et peut être entraîné en rotation pour les besoins de la dépose des produits constitutifs du pneumatique. On commence par déposer sur la membrane 10 le mélange à base de butyl constituant la peau intérieure du pneumatique, puis on superpose tous les constituants nécessaires, à savoir les fils de renforcement constituant l'armature du pneumatique, et tous les mélanges de caoutchoucs formulés selon l'endroit où ils sont déposé, et donc selon la fonction de ces caoutchoucs dans le pneu. Tous les constituants nécessaires sont ainsi déposés à l'endroit requis sur la dite membrane. L'objet de cette invention n'étant pas l'architecture du pneumatique en elle-même, il n'est point nécessaire d'entrer dans des détails relatifs à la conception du pneu lui-même.

Après assemblage de l'ébauche T, une potence 6 peut à nouveau saisir le module 1, qui est alors libéré du moyeu 7 et transporté du poste d'assemblage au poste de vulcanisation.

On va maintenant décrire comment on utilise le module 1 au poste de vulcanisation, en s'appuyant en particulier sur les figures 4 et 5. Une potence 6 (voir figure 1 pour la potence) amène le module 1 supportant une ébauche crue et le présente au préhenseur 50. Les ergots 500 se referment autour de la jante 15. La potence 6 libère la jante 15 et est évacuée. Le vérin central 51 se rapproche du plateau 30 jusqu'à l'accoster. Les basculeurs 510 agrippent le plateau 30. On peut ensuite fermer le moule extérieur (coquilles 57 et secteurs 58) et procéder à toutes les opérations permettant d'effectuer la cuisson du pneumatique.

Ensuite, on procède au démoulage du pneumatique, qui débute par l'ouverture du moule extérieur. Afin d'escamoter la membrane 10 et de rabattre les pétales 40 et 41, on combine l'action du vide à l'intérieur de l'enceinte délimitée par la membrane 10 et un mouvement axial d'éloignement relatif des plateaux 30 et 31. Le coulisseau 501 appuie sur le mécanisme de déverrouillage 34. On voit à la figure 5 que le coulissement du vérin central 51 par rapport au préhenseur 50 permet d'écarter les plateaux. Grâce aux différents joints d'étanchéité, cette enceinte reste étanche, ce qui fait qu'il est possible de la mettre en dépression afin de favoriser le plissement et le rabattement de la membrane 10. Un pli de ladite membrane 10 est visible à la figure 5. On peut aussi injecter de l'air sous pression entre le pneumatique et la membrane 10, pour favoriser le décollement de celle-ci. Un endroit favorable pour cette injection est l'arrière des pétales dans la partie radialement supérieure de ceux-ci. On prévoit une canalisation d'air 18 cheminant dans l'épaisseur d'un pétale et débouchant à la surface du pétale par exemple en 14 (voir figure 4).

Le pneumatique peut alors être saisi par un manipulateur de déchargement qui l'agrippe par exemple par la bande de roulement. Il peut être évacué par un déplacement axial relatif entre pneumatique et module. Comme l'écartement des plateaux 30, 31 précède le déchargement du pneumatique, on comprend que ce dernier, qui pourrait avoir tendance à ne pas avoir suivi le mouvement du plateau 30, doit en tout état de cause être capable de franchir sans peine l'ensemble des pétales 40, 41 du plateau 30 se trouvant du côté évacuation (côté gauche à la figure 5). C'est donc de ce seul côté qu'il est indispensable d'empêcher que ceux-ci ne se redressent et ne contrarient le déchargement du pneumatique. C'est le rôle des ressorts 48 dans cet exemple de réalisation.

Ensuite, le vérin central 51 ramène le plateau 30 au contact du plateau 31, puis le coulisseau 501 recule pour verrouiller les plateaux et reconstituer la jante 15. Ce faisant, la pression interne à la membrane peut être rétablie au niveau convenable pour l'assemblage du pneumatique suivant.

L'utilisation de fils à 0° et à 90° de grande raideur (par exemple en aramide), pour armer une membrane en caoutchouc, permet néanmoins de conserver à celle-ci un caractère élastiquement déformable, sous l'effet de la pression interne, tout en contrôlant très bien sa géométrie à une pression donnée. On peut ainsi disposer d'un support d'assemblage de très bonne précision géométrique, ce qui apparente ce support aux noyaux rigides réalisés en matière métallique. En même temps, on dispose d'une membrane de vulcanisation capable de s'accommoder très facilement de petites variations du volume à mouler, dues par exemple aux tolérances sur les volumes de caoutchouc constituant l'ébauche crue ; on dispose d'une membrane capable d'accepter un léger supplément de conformation qui, s'il est prévu, permet de fabriquer l'ébauche crue très légèrement en dessous de la taille finale du pneumatique, ce qui peut faciliter la fermeture des secteurs du moule, en particulier avec certaines sculptures. Même si une telle membrane, au cours du moulage débutant la phase de cuisson, ne transmet au pneumatique une pression de moulage qui n'est qu'une fraction de sa pression de gonflage, elle s'apparente malgré tout aux membranes non armées utilisées couramment jusqu'à l'heure actuelle. On peut qualifier la cavité de moulage qu'elle définit avec les coquilles et les secteurs de moule semi-rigide.

La présente invention permet de combiner les avantages d'un procédé de fabrication sans conformation avec les avantages d'un moulage avec un moule comportant moins de pièces parce que dépourvu de noyau intérieur, donc sans devoir construire de mécanisme pour démonter et remonter un tel noyau intérieur. Tous les éléments décrits dans le présent mémoire ont été donnés pour apporter une illustration complète de l'invention, sans bien sûr qu'il soit nécessaire d'en faire usage simultanément.

## Revendications

1. Procédé de fabrication d'un pneu, comprenant une phase d'assemblage formant une ébauche crue et une phase de vulcanisation, dans lequel on utilise une membrane flexible gonflable, capable de retenir par adhésion le caoutchouc cru constituant la peau intérieure du pneu pendant la phase d'assemblage, et capable de se séparer du pneu après vulcanisation, comprenant les étapes suivantes:
- on gonfle ladite membrane à une pression d'assemblage donnée, de façon à former un support de référence pour l'assemblage, ledit support ayant une forme toroïdale,
- ensuite on forme une ébauche crue en débutant par la dépose du caoutchouc constituant la peau intérieure du pneumatique par bobinage d'un ruban, puis en déposant progressivement et dans l'ordre requis tous les constituants voulus sur ladite membrane,
- ensuite on vulcanise l'ébauche,
- et enfin on dégonfle ladite membrane et on la retire de l'intérieur du pneumatique.

2. Procédé selon la revendication 1, dans lequel on utilise une membrane en caoutchouc armé, capable de prendre, sous l'effet de la pression de gonflage, une forme semblable à la forme finale de fabrication de la surface intérieure du pneu.

3. Procédé selon l'une des revendications 1 ou 2, dans lequel les enroulements adjacents, réalisés lors du bobinage d'un ruban pour déposer le caoutchouc de la peau intérieure du pneumatique, se chevauchent légèrement jusqu'à recouvrir tout le support.

4. Module (1) de fabrication de pneu, comportant une membrane (10) flexible gonflable et escamotable lorsqu'elle est dégonflée, ledit module comportant des moyens permettant d'ancrer ladite membrane et permettant d'offrir une prise pour le déplacement du module et permettant de définir, avec ladite membrane, une enceinte (S) gonflable, formant au moins partiellement un support de forme toroïdale à l'état gonflé, et comportant deux prises de connexion permettant de faire circuler un fluide apportant les calories nécessaires à la vulcanisation, et comportant au moins une paroi (4) rigide montée sur un plateau (30, 31), adjacente à ladite membrane (10) lorsque celle-ci est gonflée, disposée à l'extérieur de celle-ci, ladite paroi rigide étant escamotable radialement afin de pouvoir séparer le pneu dudit module (1) après vulcanisation et pouvant être déployée radialement afin de constituer une surface continue, servant de référence pour l'assemblage du pneumatique.

5. Module selon la revendication 4, caractérisé en ce que ladite membrane (10) comporte deux talons (11) et en ce que lesdits moyens comportent deux plateaux (30, 31) mobiles axialement l'un par rapport à l'autre, et en ce que des moyens d'étanchéité assurent l'étanchéité lorsque lesdits plateaux sont écartés l'un de l'autre.

6. Module selon la revendication 4 ou 5, dans lequel ladite paroi rigide comporte au moins une partie concave, vue de l'extérieur du module.

7. Module selon la revendication 6, caractérisé en ce que ladite paroi est formée par un ensemble de pétales (40, 41), articulés sur ledit plateau (30, 31) chacun autour d'un axe perpendiculaire à un plan méridien, formant une surface continue en position déployée et se disposant de façon alternée les uns sous les autres en position escamotée.

8. Module selon la revendication 7, caractérisé en ce que le passage de la position escamotée à la position déployée se commande par le gonflage de ladite membrane (10), et le passage inverse est autorisé par le dégonflage de ladite membrane (10).

9. Module selon la revendication 8, dans lequel chaque paroi comporte un nombre pair de pétales, répartis en deux groupes, les pétales adjacents circonférentiellement appartenant à des groupes différents, le basculement en position escamotée orientant les pétales axialement vers le centre du module.

10. Module selon l'une des revendications 7 à 9, dans lequel la position déployée de tous les pétales est définie par une butée limitant la rotation de ceux-ci.

11. Module selon l'une des revendications 6 à 10, caractérisé en ce que, en position déployée, ladite paroi monte radialement au moins jusqu'à un rayon au-delà duquel la section méridienne de la surface extérieure du support du pneumatique fabriqué est toujours convexe.

12. Module selon l'une des revendications 4 à 11, caractérisé en ce que ladite membrane est armée par des fils de renforcement, de telle sorte que la surface extérieure de celle-ci puisse, sous la seule action d'une pression de gonflage, prendre une forme semblable au moins en partie à la forme finale de fabrication de la surface intérieure du pneu.

13. Module selon la revendication 12, caractérisé en ce que lesdits fils (12, 13) de renforcement sont les uns disposés à 90° et se développent d'un talon à l'autre, et les autres disposés à 0°.

14. Module selon l'une des revendications 4 à 13, comportant deux prises de connexion permettant de faire circuler un fluide apportant les calories nécessaires à la vulcanisation.

15. Module selon l'une des revendications 4 à 14, dans lequel ladite membrane comporte un élastomère choisi dans le groupe constitué par l'élastomère HNBR, l'élastomère éthylène acrylate rubber, tout élastomère fluoré.

## Patentansprüche

1. Verfahren zur Herstellung eines Reifens, mit einer Konfektionierungsphase, die einen Rohreifen bildet, und einer Vulkanisationsphase, in welcher man eine flexible, aufpumpbare Membran verwendet, die imstande ist, durch Anhaftung den Rohgummi, der die Innenhaut des Reifens bildet, während der Konfektionierungsphase zurückzuhalten, und imstande ist, sich vom Reifen nach der Vulkanisation abzulösen, mit den folgenden Schritten:
- man pumpt die genannte Membran auf einen vorgegebenen Konfektionierungsdruck derart auf, daß man einen Bezugsträger für die Konfektionierung bildet, wobei der genannte Träger eine torusartige Form aufweist,
- dann bildet man einen Rohreifen, indem man mit dem Auftrag von Gummi, der die Innenhaut des Reifens bildet, durch Abspulen eines Bandes beginnt, und danach fortlaufend und in der geforderten Reihenfolge alle gewünschten Bestandteile auf der genannten Membran aufträgt,
- man den Rohling dann vulkanisiert, und
- man schließlich die genannte Membran abläßt und sie aus dem Inneren des Reifens entnimmt.

2. Verfahren nach Anspruch 1, worin man eine Membran aus bewehrtem Gummi verwendet, die imstande ist, unter der Einwirkung des Aufpumpdrucks eine Form anzunehmen, die der endgültigen Herstellungsform der Innenoberfläche des Reifens ähnelt.

3. Verfahren nach einem der Ansprüche 1 oder 2, in dem die benachbarten Wicklungen, die während des Abspulens eines Bandes durchgeführt werden, um den Gummi der Innenhaut des Reifens aufzubringen, sich leicht überdecken, bis der gesamte Träger abgedeckt ist.

4. Modul (1) zur Herstellung eines Reifens mit einer flexiblen, aufpumpbaren und, wenn sie abgelassen ist, einschwenkbaren Membran (10), wobei das genannte Modul Mittel aufweist, die es gestatten, die genannte Membran zu verankern, und es gestatten, einen Angriffspunkt für die Verlagerung des Moduls zu bieten, und es gestatten, zusammen mit der genannten Membran, eine aufpumpbare Umhüllung (S) zu bilden, die mindestens teilweise und im aufgepumpten Zustand einen torusförmigen Träger bildet, und mit zwei Anschlußstellen, die es gestatten, ein Strömungsmittel umlaufen zu lassen, das die zur Vulkaniation erforderliche Wärmemenge herbeiführt, sowie mit mindestens einer starren Wand (4), die auf einer Platte (30,31) neben der genannten Membran (10) angebracht ist, wenn diese aufgepumpt ist, und außerhalb dieser angeordnet ist, wobei die genannte starre Wand radial einschwenkbar ist, um den Reifen vom genannten Modul (1) nach der Vulkanisation lösen zu können, und radial ausgefahren werden kann, um eine durchgehende Fläche zu bilden, die als Bezug für die Konfektionierung des Reifens dient.

5. Modul nach Anspruch 4, dadurch gekennzeichnet, daß die genannte Membran (10) zwei Fersenteile (11) aufweist, und daß die genannten Mittel zwei Platten (30,31) aufweisen, die axial zueinander beweglich sind, und daß Dichtungsmittel die Abdichtung sicherstellen, wenn die genannten Platten auseinander bewegt sind.

6. Modul nach Anspruch 4 oder 5, worin die genannte starre Wand mindestens einen konkaven Abschnitt aufweist, von der Außenseite des Moduls her gesehen.

7. Modul nach Anspruch 6, dadurch gekennzeichnet, daß die genannte Wand durch eine Gruppe von blütenblattartigen Sektoren (40,41) gebildet ist, die auf der genannten Platte (30,31) rund um eine Achse senkrecht zu einer Meridianebene gelenkig angebracht sind, in der ausgefahrenen Lage eine durchgehende Oberfläche bilden und in der eingeschwenkten Lage sich alternierend übereinanderlegen.

8. Modul nach Anspruch 7, dadurch gekennzeichnet, daß der Übergang aus der eingeschwenkten Lage in die ausgefahrene Lage durch das Aufpumpen der genannten Membran (10) angesteuert wird, und der umgekehrte Übergang durch das Ablassen der genannten Membran (10) ermöglicht wird.

9. Modul nach Anspruch 8, worin jede Wand eine Anzahl von Sektorpaaren aufweist, die auf zwei Gruppen verteilt sind, wobei die in Umfangsrichtung benachbarten Sektoren unterschiedlichen Gruppen angehören, und wobei das Umschwenken in die eingeschwenkte Lage die Sektoren axial der Mitte des Moduls zuwendet.

10. Modul nach einem der Ansprüche 7 bis 9, worin die ausgefahrene Lage aller Sektoren durch einen Anschlag definiert ist, der deren Schwenkbewegung begrenzt.

11. Modul nach einem der Ansprüche 6 bis 10, dadurch gekennzeichnet, daß die genannte Wand in der ausgefahrenen Lage radial mindestens bis zum Radius ansteigt, jenseits dessen der Querschnitt der Außenoberfläche des Trägers des hergestellten Reifens stets konvex ist.

12. Modul nach einem der Ansprüche 4 bis 11, dadurch gekennzeichnet, daß die genannte Membran mit Verstärkungsdrähten derart bewehrt ist, daß deren Außenoberfläche alleine unter der Wirkung eines Aufpumpdrucks eine Form annehmen kann, die mindestens teilweise der endgültigen Herstellungsform der Innenoberfläche des Reifens ähnelt.

13. Modul nach Anspruch 12, dadurch gekennzeichnet, daß die genannten Verstärkungsdrähte (12,13) unter 90° angeordnet sind und von einem Fersenteil zum anderen ausgehen , und die anderen unter 0° angeordnet sind.

14. Modul nach einem der Ansprüche 4 bis 13, mit zwei Anschlußpunkten, die es gestatten, ein Strömungsmittel umlaufen zu lassen, das die zur Vulkanisation erforderliche Wärmemenge herbeiführt.

15. Modul nach einem der Ansprüche 4 bis 14, worin die genannte Membran ein Elastomer aufweist, das aus der Gruppe ausgewählt ist, die vom Elastomer HNBR, dem Elastomer Ethylacrylatgummi und jedem fluorierten Elastomer gebildet ist.

## Claims

1. A process for manufacturing a tyre, comprising an assembly phase forming a raw blank, and a vulcanisation phase, in which an inflatable flexible bladder is used which is capable of retaining by adhesion the raw rubber forming the inner skin of the tyre during the assembly phase, and capable of separating from the tyre after vulcanisation, comprising the following steps:
- said bladder is inflated to a given assembly pressure, so as to form a reference support for the assembly, said support having a toroidal shape,
- then a raw blank is formed, starting by laying the rubber constituting the inner skin of the tyre by winding a band, then by progressively laying on said bladder all the desired constituents in the required order,
- the blank is then vulcanised,
- and finally said bladder is deflated and withdrawn from the inside of the tyre.

2. A process according to Claim 1, in which a reinforced rubber bladder is used which is capable, under the action of the inflation pressure, of adopting a form similar to the final manufactured shape of the inner surface of the tyre.

3. A process according to claim 1 or 2, in which the adjacent windings, produced during the winding of a band for laying the rubber of the inner skin of the tyre, overlap slightly, until the entire support is covered.

4. A tyre manufacture module (1), comprising an inflatable flexible bladder (10) which can be retracted when deflated, said module comprising means making it possible for said bladder to be anchored and making it possible to offer purchase for displacing the module and making it possible to define, with said bladder, an inflatable chamber (S), forming at least partially a toroidal support in the inflated state, and comprising two connection sockets which enable a fluid supplying the necessary heat for vulcanisation to be circulated, and comprising at least one rigid wall (4) mounted on a plate (30, 31), which wall is adjacent to said bladder (10) when the latter is inflated, and arranged on the outside thereof, said rigid wall being retractable radially in order to be able to separate the tyre from said module (1) after vulcanisation and being able to be unfolded radially in order to form a continuous surface acting as a reference for assembling the tyre.

5. A module according to Claim 4, characterised in that said bladder (10) comprises two heels (11) and in that said means comprise two plates (30, 31) movable axially relative to each other, and in that sealing means provide a seal when said plates are moved apart.

6. A module according to Claim 4 or 5, in which said rigid wall comprises at least one concave part, viewed from the exterior of the module.

7. A module according to Claim 6, characterised in that said wall is formed by a set of petals (40, 41), articulated to said plate (30, 31) each around an axis perpendicular to a meridian plane, forming a continuous surface in the unfolded position and being arranged alternately one under the other in the retracted position.

8. A module according to Claim 7, characterised in that the passage from the retracted position to the unfolded position is controlled by the inflation of said bladder (10), and the reverse passage is permitted by deflation of said bladder (10).

9. A module according to Claim 8, in which each wall comprises an even number of petals, distributed in two groups, circumferentially adjacent petals belonging to different groups, the swinging into the retracted position orienting the petals axially towards the centre of the module.

10. A module according to one of Claims 7 to 9, in which the unfolded position of all the petals is defined by a stop limiting the rotation thereof.

11. A module according to one of Claims 6 to 10, characterised in that, in the unfolded position, said wall is raised radially at least to a radius beyond which the meridian section of the outer surface of the support of the manufactured tyre is still convex.

12. A module according to one of Claims 4 to 11, characterised in that said bladder is reinforced by reinforcement cords, such that the outer surface thereof, under solely the action of an inflation pressure, can adopt a form similar at least in part to the final manufactured shape of the inner surface of the tyre.

13. A module according to Claim 12, characterised in that some of said reinforcement cords (12, 13) are arranged at 90° and develop from one heel to the other, and the others are arranged at 0°.

14. A module according to one of Claims 4 to 13, comprising two connection sockets which enable a fluid supplying the necessary heat for vulcanisation to be circulated.

15. A module according to one of Claims 4 to 14, in which said bladder comprises an elastomer selected from the group consisting of HNBR elastomer, ethylene acrylate rubber elastomer or any fluorinated elastomer.
